# FASCICULE DE BREVET EUROPEEN

(11) **EP 3 729 635 B1**
(45) Date de publication et mention de la délivrance du brevet: **06.03.2024**
(21) Numéro de dépôt: 18822422.4
(22) Date de dépôt: 14.11.2018
(51) Int. Cl.: H02P 9/02, H02P 9/10

(54) **SYSTÈME ÉLECTRIQUE COMPORTANT UN ONDULEUR STATORIQUE ET UN DISPOSITIF ÉLECTRIQUE AUXILIAIRE, DESTINÉS À ÊTRE CONNECTÉS À UNE SOURCE DE TENSION**
ELEKTRISCHES SYSTEM, DAS EINEN STATOREN INVERTER UND EIN HILFSSYSTEM, ZUSAMMENHÄNGEND ZU EINER SPANNUNGSQUELLE EINSCHLIESST
ELECTRIC SYSTEM INCLUDING A STATOR INVERTER AND AN AUXILIARY SYSTEM, CONNECTED TO A VOLTAGE SOURCE

(30) Priorité: 22.12.2017 FR 1762917
(43) Date de publication de la demande: 28.10.2020
(73) Titulaire: VALEO EQUIPEMENTS ELECTRIQUES MOTEUR, 94046 Créteil Cedex (FR)
(72) Inventeur: BERTRAND, Mathieu, 94046 Creteil (FR); LECOCQ, Yann, 94046 Creteil (FR)
(74) Mandataire: Valeo Powertrain Systems
(86) Numéro de dépôt international: PCT/FR2018/052837
(87) Numéro de publication internationale: WO 2019/122554

(56) Documents cités:
- EP-A2- 1 209 806
- DE-A1-102012 211 802
- US-A1- 2007 138 795
- HOBRAICHE J ET AL: "A New PWM Strategy to Reduce the Inverter Input Current Ripples", IEEE TRANSACTIONS ON POWER ELECTRONICS, INSTITUTE OF ELECTRICAL AND ELECTRONICS ENGINEERS, USA, vol. 24, no. 1, 1 janvier 2009 (2009-01-01), pages 172-180, XP011249797, ISSN: 0885-8993

## Description

### DOMAINE TECHNIQUE

La présente invention concerne un système électrique comportant un onduleur statorique et un dispositif électrique auxiliaire, destinés à être connectés à une source de tension.

### ARRIÈRE-PLAN TECHNOLOGIQUE

Il est connu de l'état de la technique, tel que DE 10 2012 211802 A1, d'utiliser un système électrique comportant :
- un onduleur statorique destiné à être connecté, d'une part, à une borne positive de la source de tension pour recevoir un courant d'onduleur statorique et, d'autre part, à une machine électrique comportant des phases statoriques, afin alimenter la machine électrique à partir de la source de tension,
- un dispositif électrique auxiliaire destiné à être connecté à la borne positive de la source de tension pour recevoir un courant auxiliaire, le dispositif électrique auxiliaire étant conçu pour sélectivement prendre une première configuration dans laquelle le courant auxiliaire est positif et une deuxième configuration dans laquelle le courant auxiliaire est négatif ou nul.

Une capacité est généralement prévue aux bornes de l'onduleur. Cette capacité est mise en oeuvre par un ou plusieurs condensateurs, généralement de grande taille. La source de tension fournit généralement un courant sensiblement constant à l'ensemble de l'onduleur et du dispositif électrique auxiliaire, tandis que la capacité fournit un courant variable. Or, plus le courant traversant la capacité présente une valeur efficace importante, plus elle a tendance à s'échauffer, ce qui nécessite d'utiliser des composants plus résistants et donc plus chers pour former la capacité.

L'invention a pour but de proposer un système électrique permettant de réduire le courant efficace reçu par l'onduleur statorique et le dispositif électrique auxiliaire.

### RÉSUMÉ DE L'INVENTION

A cet effet, il est proposé un système électrique tel que revendiqué dans la revendication indépendante 1 annexée.

Grâce à l'invention, lorsque le courant d'onduleur est détecté comme positif, le dispositif de commande commande le dispositif électrique auxiliaire pour que le courant de ce dernier soit négatif ou nul. Ainsi, on évite que ces courants s'additionnent, voire même on compense au moins en partie le courant d'onduleur par le courant auxiliaire lorsque ce dernier est négatif. Ainsi, la valeur efficace du courant reçu par l'ensemble de l'onduleur statorique et du dispositif électrique auxiliaire est diminuée, de sorte que la valeur efficace du courant de capacité est elle aussi diminuée.

De façon optionnelle, l'onduleur statorique comporte des bras respectivement associés aux phases statoriques, chaque bras comportant un interrupteur de côté haut et un interrupteur de côté bas connectés l'un à l'autre en un point milieu également connecté à la phase statorique associée ; et le dispositif de détection est conçu pour détecter que tous les interrupteurs d'un même côté sont tous ouverts ou bien tous fermés pour détecter que le courant d'onduleur est nul.

De façon optionnelle également, le dispositif de commande est en outre conçu pour : recevoir, d'une part, une mesure d'une grandeur électrique présentée par le dispositif électrique auxiliaire et, d'autre part, une consigne de cette grandeur électrique ; et modifier la durée du premier intervalle de temps et/ou du deuxième intervalle de temps afin que la mesure de la grandeur électrique reste proche de la consigne.

De façon optionnelle également, la machine électrique comporte un enroulement rotorique ; et le dispositif électrique auxiliaire est un onduleur rotorique conçu pour fournir une tension rotorique à l'enroulement rotorique de la machine électrique à partir de la source de tension.

De façon optionnelle également, la grandeur électrique est un courant rotorique parcourant l'enroulement rotorique de la machine électrique.

De façon optionnelle également, le courant auxiliaire est négatif dans la deuxième configuration du dispositif électrique auxiliaire.

De façon optionnelle également, le dispositif électrique auxiliaire est en outre conçu pour sélectivement prendre une troisième configuration dans laquelle le courant auxiliaire est nul ; et, dans le deuxième mode de commande, le dispositif de commande est conçu pour placer le dispositif électrique auxiliaire dans sa première configuration lorsque le courant d'onduleur statorique est détecté comme nul, et dans sa troisième configuration lorsque le courant d'onduleur statorique est détecté comme positif.

De façon optionnelle également, le dispositif électrique auxiliaire est un convertisseur de tension conçu pour fournir une tension de sortie à partir de la source de tension.

De façon optionnelle également, la grandeur électrique est la tension de sortie du convertisseur de tension.

De façon optionnelle également, le courant auxiliaire est nul dans la deuxième configuration du dispositif électrique auxiliaire.

De façon optionnelle également, dans le deuxième mode de commande, le dispositif de commande est conçu pour placer le dispositif électrique auxiliaire soit dans sa première configuration, soit dans sa deuxième configuration, indépendamment du courant d'onduleur statorique.

### DESCRIPTION DES FIGURES

La figure 1 est un schéma électrique illustrant un système électrique selon un premier mode de réalisation de l'invention.
Les figures 2 à 4 sont des schémas électriques illustrant différentes configurations d'un onduleur rotorique du système électrique de la figure 1.
La figure 5 est une suite de chronogrammes illustrant l'évolution au cours du temps de diverses grandeurs électriques du système électrique de la figure 1.
La figure 6 est un schéma électrique illustrant un système électrique selon un deuxième mode de réalisation de l'invention.

### DESCRIPTION DÉTAILLÉE

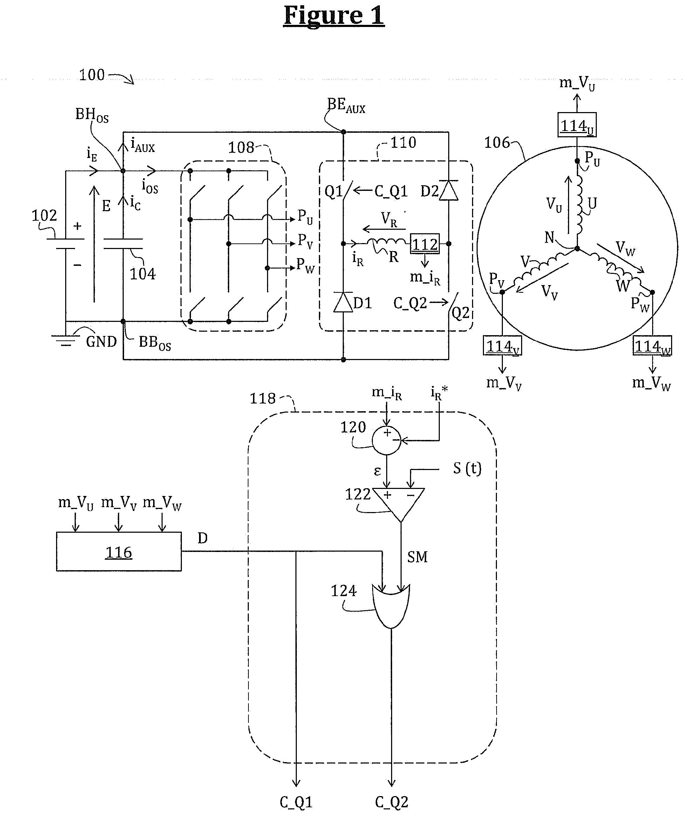

En référence à la figure 1, un système électrique 100 selon un premier mode de réalisation de l'invention va à présent être décrit. Le système électrique 100 est par exemple destiné à être implémenté dans un véhicule automobile.

Le système électrique 100 comporte tout d'abord une source de tension continue 102 comportant une borne positive et une borne négative, cette dernière étant généralement connectée à une masse électrique GND, telle qu'un châssis du véhicule automobile. La source de tension continue 102 est conçue pour fournir une tension d'entrée E continue entre ces bornes.

Le système électrique 100 comporte en outre une machine électrique 106 comportant des phases statoriques U, V, W dont, dans l'exemple décrit, des premières extrémités respectives sont connectées à un point neutre N. Dans l'exemple décrit, la machine électrique 106 est une machine électrique triphasée et comporte en outre un enroulement rotorique R destiné à se voir appliquer une tension rotorique V_{R} et à être parcouru par un courant rotorique i_{R}. La machine électrique 106 est par exemple une machine électrique synchrone à rotor bobiné. La machine électrique 106 est par exemple couplée à une courroie d'alterno-démarreur pour entraîner cette courroie en fonctionnement en tant que moteur et pour être entraînée par la courroie en fonctionnement en tant que génératrice.

Le système électrique 100 comporte en outre un onduleur statorique 108 connecté, d'une part, aux bornes de la source de tension continue 102 et, d'autre part, à la machine électrique 106 pour alimenter les phases statoriques U, V, W de la machine électrique 106 à partir de la source de tension continue 102.

Plus précisément, l'onduleur statorique 108 comporte tout d'abord une borne haute BHos et une borne basse BBos respectivement connectés aux bornes positive et négative de la source de tension continue 102. L'onduleur statorique 108 est destiné à recevoir un courant d'onduleur statorique ios depuis la borne haute BHos.

L'onduleur statorique 108 comporte en outre des bras respectivement associés aux phases statoriques U, V, W. Chaque bras comporte un interrupteur de côté haut connecté à la borne haute BHos et un interrupteur de côté bas connecté à la borne basse BBos. L'interrupteur de côté haut et l'interrupteur de côté bas sont en outre connectés l'un à l'autre en un point milieu connecté à la phase statorique U, V, W associée. Chaque bras est destiné à être commandé pour commuter entre deux configurations. Dans la première, dite configuration haute, l'interrupteur de côté haut est fermé et l'interrupteur de côté bas est ouvert de sorte que la tension d'entrée E est appliquée à une deuxième extrémité de la phase statorique U, V, W associée. Dans la deuxième, dite configuration basse, l'interrupteur de côté haut est ouvert et l'interrupteur de côté bas est fermé de sorte qu'une tension nulle est appliquée à la deuxième extrémité de la phase statorique U, V, W associée. L'onduleur 108 est commandé pour faire commuter chaque bras entre ces deux configurations, de manière réguler les courants parcourant les phases statoriques U, V, W.

Le système électrique 100 comporte en outre une capacité 104 connectée entre les bornes BHos, BBos de l'onduleur 108. En particulier, une borne de la capacité est connectée à la borne haute BHos pour fournir un courant de capacité ic à cette borne haute BHos. La capacité 104 comporte par exemple un ou plusieurs condensateurs, par exemple des condensateurs chimiques.

Il sera apprécié que la source de tension continue 102 et le ou les condensateurs formant la capacité 104 comportent des inductances et des résistances parasites permettant en particulier au courant de capacité ic d'être non nul alors que la tension d'entrée E est constante.

Le système électrique 100 comporte en outre un dispositif électrique auxiliaire 110 connecté aux bornes BHos, BBos de l'onduleur statorique 108.

Dans l'exemple décrit, le dispositif électrique auxiliaire 110 est un onduleur rotorique conçu pour fournir la tension rotorique V_{R} à l'enroulement rotorique R de la machine électrique 106 à partir de la source de tension continue 102.

Plus précisément, l'onduleur rotorique 110 comporte tout d'abord une borne d'entrée BE_{AUX} connectée à la borne haute BHos de l'onduleur statorique 108 pour recevoir un courant auxiliaire i_{AUX}.

L'onduleur rotorique 110 comporte en outre deux bras respectivement associés à deux extrémités de l'enroulement rotorique R. Le premier bras comporte un interrupteur de côté haut Q1 connecté à la borne d'entrée BE_{AUX} et une diode D1 dont une anode est connectée à la borne négative de la source de tension continue 102. L'interrupteur Q1 et une cathode de la diode D1 sont en outre connectés l'un à l'autre en un point milieu connecté à une première extrémité de l'enroulement rotorique R. Le deuxième bras comporte un interrupteur de côté bas Q2 connecté à la borne négative de la source de tension continue 102 et une diode D2 dont une cathode est connectée à la borne d'entrée BE_{AUX}. L'interrupteur Q2 et une anode de la diode D2 sont en outre connectés l'un à l'autre en un point milieu connecté à une deuxième extrémité de l'enroulement rotorique R. Les interrupteurs Q1, Q2 sont destinés à se voir appliquer des commandes respectives C_Q1, C_Q2 pour sélectivement ouvrir et fermer chacun d'eux.

Ainsi, en fonction de l'état des interrupteurs Q1, Q2, l'onduleur rotorique 110 est conçu pour sélectivement prendre trois configurations.

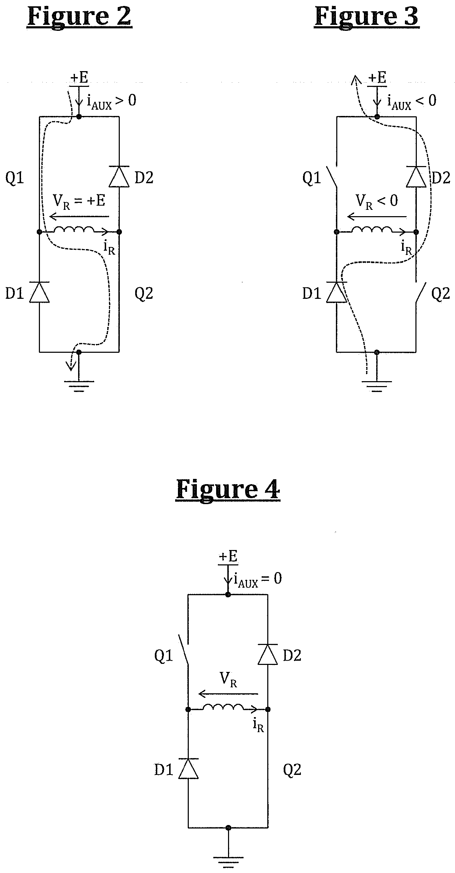

En référence à la figure 2, la première configuration est obtenue lorsque les interrupteurs Q1, Q2 sont fermés. Dans cette première configuration, l'onduleur rotorique 110 applique la tension +E à l'enroulement rotorique R (V_{R} = +E). Ainsi, le courant auxiliaire i_{AUX} est égal au courant rotorique i_{R} et est donc positif.

En référence à la figure 3, la deuxième configuration est obtenue lorsque les interrupteurs Q1, Q2 sont ouverts. Dans cette deuxième configuration, du fait de l'inductance élevée de l'enroulement rotorique R, le courant rotorique i_{R} reste sensiblement constant (légèrement décroissant) et impose donc un courant auxiliaire i_{AUX} négatif qui s'écoule au travers des diodes D1, D2.

En référence à la figure 4, la troisième configuration est obtenue lorsque l'interrupteur Q1 est ouvert et l'interrupteur Q2 est fermé. Dans cette troisième configuration, le courant auxiliaire i_{AUX} ne peut ni s'écouler au travers de l'interrupteur Q1 ni s'écouler au travers de la diode D2, de sorte que ce courant auxiliaire i_{AUX} est nul.

De retour à la figure 1, afin de réduire la valeur efficace du courant de capacité ic, il est prévu un mécanisme de compensation tel que, au moins une partie du temps, le courant auxiliaire i_{AUX} soit négatif ou nul pendant que le courant d'onduleur statorique ios est positif. Ainsi, les deux courants i_{AUX}, ios se compensent au moins en partie, ce qui entraîne une baisse de de la valeur efficace du courant de capacité ic.

Plus précisément, le système électrique 100 comporte, d'une part, un capteur 112 conçu pour fournir une mesure m_i_{R} du courant rotorique i_{R} et, d'autre part, trois capteurs 114_{U}, 114_{V}, 114_{W} conçus pour respectivement fournir des mesures m_V_{U}, m_V_{V}, m_V_{W} des tensions de phase statoriques V_{U}, V_{V}, V_{W}.

Le système électrique 100 comporte en outre un dispositif de détection 116 conçu pour détecter si le courant d'onduleur statorique ios est positif ou bien s'il est nul.

Dans l'exemple décrit, le dispositif de détection 116 est conçu pour détecter que tous les interrupteurs d'un même côté sont tous ouverts ou bien tous fermés (ce qui signifie, dans l'exemple décrit, que les interrupteurs de l'autre côté sont tous ouverts puisque les interrupteurs de côté haut et les interrupteurs de côté bas sont commandés en opposition) pour détecter que le courant d'onduleur statorique ios est nul. Le dispositif de détection 116 est ainsi par exemple conçu pour fournir un signal de détection D valant 1 lorsque le courant d'onduleur statorique ios est détecté comme nul et valant 0 sinon (le courant d'onduleur statorique ios est alors positif). Par exemple, le dispositif de détection 116 est conçu pour recevoir les mesures m_V_{U}, m_V_{V}, m_V_{W} des tensions de phase statorique Vu, Vv, Vw et pour détecter que le courant d'onduleur statorique ios est nul lorsque toutes les mesures m_V_{U}, m_V_{V}, m_V_{W} sont identiques, à 0V ou bien à +E V.

Le système électrique 100 comporte en outre un dispositif de commande 118 conçu pour commander le dispositif électrique auxiliaire 110 alternativement selon deux modes de commande, différents l'un de l'autre. Le premier mode de commande est appliqué sur un premier intervalle de temps I1 et le deuxième mode de commande est appliqué sur un deuxième intervalle de temps I2, les intervalles de temps I1, I2 alternant au cours du temps.

Dans le premier mode de commande, le dispositif de commande 118 est conçu pour placer le dispositif électrique auxiliaire 110 dans sa première configuration (i_{AUX} positif) lorsque le courant d'onduleur statorique ios est détecté comme nul, et dans sa deuxième configuration (i_{AUX} négatif) lorsque le courant d'onduleur statorique ios est détecté comme positif.

Dans le deuxième mode de commande, le dispositif de commande 118 est conçu pour placer le dispositif électrique auxiliaire 110 dans sa première configuration (i_{AUX} positif) lorsque le courant d'onduleur statorique ios est détecté comme nul, et dans sa troisième configuration (i_{AUX} nul) lorsque le courant d'onduleur statorique ios est détecté comme positif.

Dans l'exemple décrit, le dispositif de commande 118 est en outre conçu pour recevoir, d'une part, une mesure d'une grandeur électrique présentée par le dispositif électrique auxiliaire 110 et, d'autre part, une consigne de cette grandeur électrique. Dans l'exemple décrit, la grandeur électrique est le courant rotorique i_{R} parcourant l'enroulement rotorique R de la machine électrique 106.

Le dispositif de commande 118 est en outre conçu pour modifier la durée du premier intervalle de temps I1 et/ou du deuxième intervalle de temps I2 afin que la mesure m_i_{R} du courant rotorique i_{R} reste proche de la consigne i_{R}*.

Plus précisément, le dispositif de commande 118 comporte un premier comparateur 120 conçu pour comparer la mesure m_i_{R} à la consigne i_{R}* afin de fournir un signal d'erreur ε.

Le dispositif de commande 118 comporte en outre un deuxième comparateur 122 conçu pour comparer le signal d'erreur ε à un signal de rampe S(t) pour fournir un signal de mode de commande SM indiquant selon quel mode de commande l'onduleur rotorique 110 doit être commandé. Dans l'exemple décrit, le signal de mode de commande SM vaut 1 lorsque le signal de rampe S(t) est inférieur au signal d'erreur ε et vaut 0 lorsque le signal de rampe S(t) est supérieur au signal d'erreur ε. En outre, le signal de rampe S(t) présente de préférence une fréquence prédéfinie, par exemple égale à 1 kHz, tandis que les bras de l'onduleur statorique 108 commutent par exemple à 10 kHz.

Ainsi, le dispositif de commande 118 est conçu pour commander l'onduleur rotorique 110 suivant le premier mode de commande lorsque le signal de rampe S(t) est inférieur au signal d'erreur ε (c'est-à-dire lorsque le signal de mode de commande SM vaut 1), et suivant le deuxième mode de commande lorsque le signal de rampe S(t) est supérieur au signal d'erreur ε (c'est-à-dire lorsque le signal de mode de commande SM vaut 0). Ainsi, le premier intervalle de temps I1 correspond au temps durant lequel le signal de rampe S(t) est inférieur au signal d'erreur ε et le deuxième intervalle de temps I2 correspond au temps durant lequel le signal de rampe S(t) est supérieur au signal d'erreur ε. Il sera apprécié que, dans l'exemple décrit, la somme des intervalles de temps I1, I2 est prédéfinie et toujours égale à l'inverse de la fréquence du signal de rampe S(t).

Plus précisément, le dispositif de commande 118 est tout d'abord conçu pour utiliser le signal de détection D comme commande C_Q1.

En outre, le dispositif de commande 118 comporte une porte logique OU 124 recevant le signal de détection D et le signal de mode de commande et fournissant en sortie la commande C_Q2.

Ainsi, lorsque le signal de rampe S(t) est inférieur au signal d'erreur ε, la commande C_Q2 commande l'interrupteur Q2 à l'état fermé, tandis que la commande C_Q1 commande l'interrupteur Q1 alternativement à l'état ouvert et à l'état fermé, en fonction du signal de détection D. Ainsi, le dispositif de commande 118 commande l'onduleur rotorique 110 selon le deuxième mode de commande (alternance i_{AUX} positif et nul).

Lorsque le signal de rampe S(t) est supérieur au signal d'erreur ε, la sortie de la porte logique OU 124 suit le signal de détection D, de sorte que la commande C_Q2 et la commande C_Q1 commandent simultanément les interrupteurs Q1, Q2 alternativement à l'état ouvert et à l'état fermé, en fonction du signal de détection D. Ainsi, le dispositif de commande 118 commande l'onduleur rotorique 110 selon le premier mode de commande (alternance i_{AUX} positif et négatif).

Pendant le premier mode de commande, le courant auxiliaire i_{AUX} est alternativement positif et négatif. Cependant, les instants où le courant d'onduleur statorique ios est nul sont moins fréquents que les instants où le courant d'onduleur statorique ios est positif. Ainsi, le courant auxiliaire i_{AUX} est plus fréquemment négatif, de sorte que le courant rotorique i_{R} a tendance à décroître. Cependant, pendant le deuxième mode de commande, le courant auxiliaire i_{AUX} est alternativement positif et nul, et donc en moyenne positif, de sorte que le courant rotorique i_{R} se recharge et a tendance à croître.

D'après ce qui précède, en fonction du signal d'erreur ε, le premier intervalle de temps I1 sera plus ou moins grand et le deuxième intervalle de temps I2 inversement plus ou moins grand, ce qui crée une rétroaction permettant au courant rotorique i_{R} de rester proche de la consigne i_{R}*.

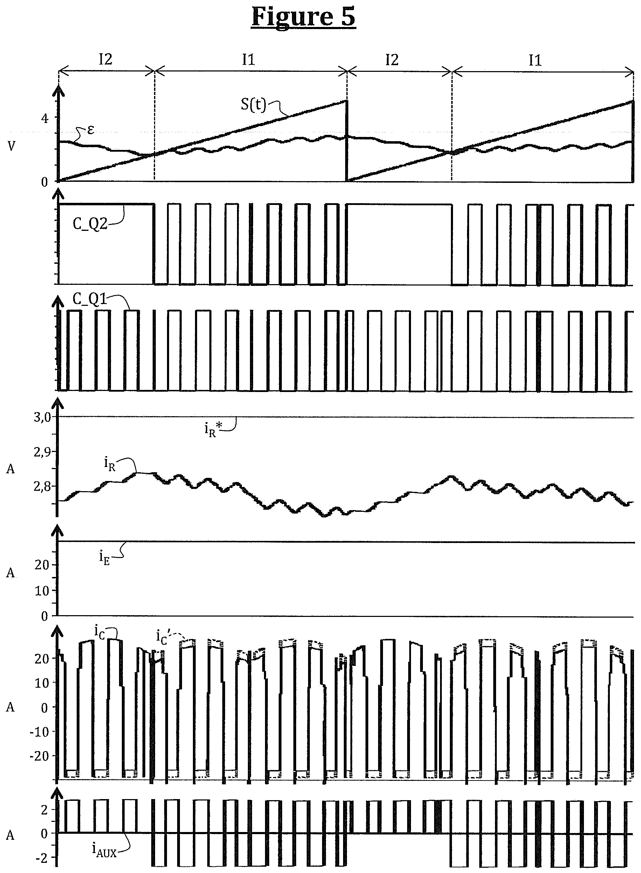

La figure 5 illustre l'évolution au cours du temps du signal d'erreur ε, du signal de rampe S(t), de la commande C_Q1, de la commande C_Q2, du courant rotorique i_{R}, du courant de capacité ic et du courant de capacité observé dans l'état de la technique, lorsque l'onduleur rotorique 110 est commandé indépendamment de l'onduleur statorique 108. Le courant de capacité de l'état de la technique est noté ic' et représenté en pointillés lorsqu'il est différent du courant de capacité ic.

Comme cela est visible sur la figure 5, le courant de capacité ic est par moments inférieur en valeur absolue à celui de l'état de la technique. Ainsi, la valeur efficace du courant de capacité ic est inférieure à celle de l'état de la technique.

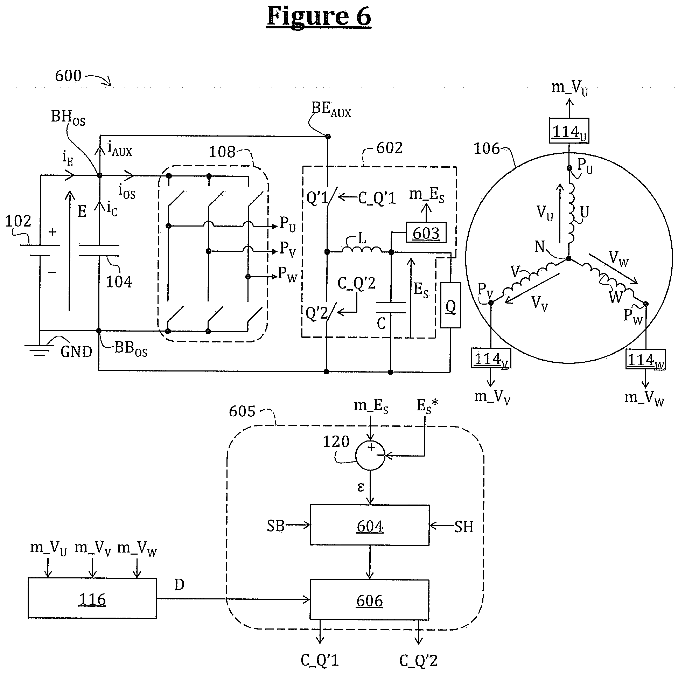

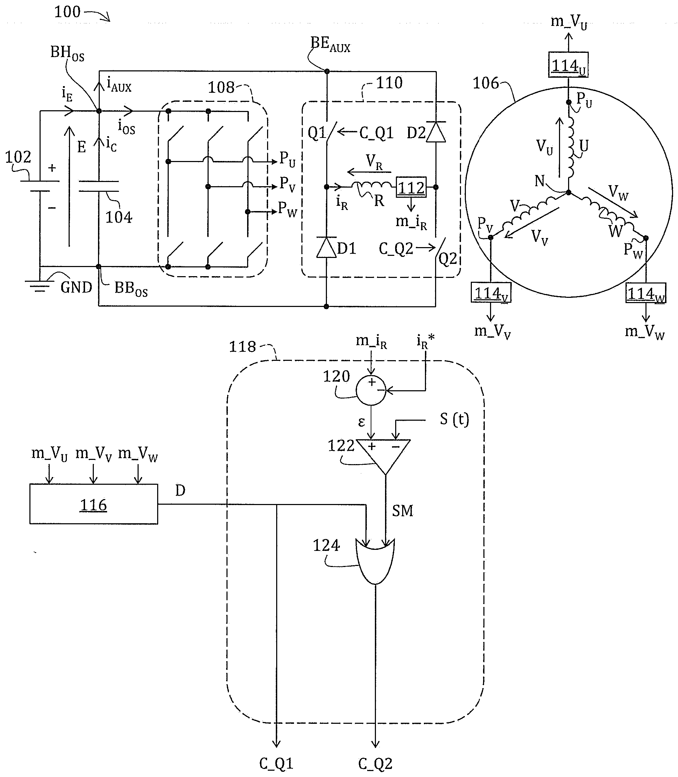

En référence à la figure 6, un système électrique 600 selon un deuxième mode de réalisation de l'invention va à présent être décrit. Le système électrique 600 est lui aussi par exemple destiné à être implémenté dans un véhicule automobile.

Le système électrique 600 est identique à celui de la figure 1, si ce n'est que le dispositif électrique auxiliaire est cette fois un convertisseur de tension 602 continue-continue.

Dans l'exemple décrit, le convertisseur de tension 602 comporte un interrupteur de côté haut Q'1 connecté à la borne d'entrée BE_{AUX} et un interrupteur de côté bas Q'2 connecté à la borne négative de la source de tension continue 102. L'interrupteur Q'1 et l'interrupteur côté bas Q'2 sont en outre connectés l'un à l'autre en un point milieu. Les interrupteurs Q'1, Q'2 sont destinés à se voir appliquer des commandes respectives C_Q'1, C_Q'2 pour sélectivement ouvrir et fermer chacun d'eux. Les interrupteurs Q'1, Q'2 sont destinés à être commandés en opposition, de sorte que les commandes C_Q'1, C_Q'2 sont l'opposée l'une de l'autre. Le convertisseur de tension 602 comporte en outre, d'une part, une inductance L dont une extrémité est connectée au point milieu et une capacité C connectée entre l'autre extrémité de l'inductance L et la borne négative de la source de tension continue 102. Le convertisseur de tension 602 est ainsi conçu pour fournir, aux bornes de la capacité C, une tension de sortie Es à partir de la source de tension continue 102. Cette tension de sortie Es est destinée à être fournie à une charge Q pour l'alimenter.

En fonction de l'état des interrupteurs Q'1, Q'2 (qui sont destinés à être commandés en opposition), le convertisseur de tension 602 est conçu pour sélectivement prendre deux configurations.

La première configuration est obtenue lorsque l'interrupteurs Q'1 est fermé (interrupteur Q'2 ouvert). Dans cette première configuration, le convertisseur de tension 602 absorbe du courant de sorte que le courant auxiliaire i_{AUX} est positif.

La deuxième configuration est obtenue lorsque l'interrupteurs Q'1 est ouvert (interrupteur Q'2 fermé). Dans cette deuxième configuration, l'interrupteur Q'1 ouvert empêche l'entrée de courant dans le convertisseur de tension 602 de sorte que le courant auxiliaire i_{AUX} est nul.

Le système électrique 600 comporte en outre un capteur 603 conçu pour fournir une mesure m_Es de la tension de sortie Es.

Le dispositif de commande, qui porte à présent la référence 605, est conçu pour commander le dispositif électrique auxiliaire 602 alternativement selon deux modes de commande, différents l'un de l'autre. Le premier mode de commande est appliqué sur un premier intervalle de temps I1 et le deuxième mode de commande est appliqué sur un deuxième intervalle de temps I2, les intervalles de temps I1, I2 alternant au cours du temps.

Dans le premier mode de commande, le dispositif de commande 605 est conçu pour placer le dispositif électrique auxiliaire 602 dans sa première configuration (i_{AUX} positif) lorsque le courant d'onduleur statorique ios est détecté comme nul, et dans sa deuxième configuration (i_{AUX} nul) lorsque le courant d'onduleur statorique ios est détecté comme positif. Ainsi, quand l'un des courants ios, i_{AUX} est positif, l'autre est nul. On évite ainsi que les courants ne s'additionnent. Cependant, dans ce cas, le fonctionnement du convertisseur de tension 602 est asservi au fonctionnement de l'onduleur statorique 108, de sorte que la tension de sortie Es peut dévier de la tension de sortie souhaitée.

Pour pallier cela, dans le deuxième mode de commande, le dispositif de commande 605 est conçu pour placer le dispositif électrique auxiliaire 602 soit dans la première configuration, soit dans sa deuxième configuration, indépendamment du courant d'onduleur statorique ios.

Comme dans le premier mode de réalisation, le dispositif de commande 605 est conçu pour recevoir, d'une part, une mesure d'une grandeur électrique présentée par le dispositif électrique auxiliaire 602 et, d'autre part, une consigne de cette grandeur électrique. Dans l'exemple décrit, la grandeur électrique est la tension de sortie Es du convertisseur de tension 602.

Le dispositif de commande 605 comporte ainsi un comparateur 604 conçu pour comparer le signal d'erreur ε avec un seuil bas SB (négatif) et un seuil haut SH (positif).

Le dispositif de commande 605 comporte en outre un sélecteur de mode 606 conçu pour sélectionner un des deux modes de commande en fonction du résultat de la comparaison avec les seuils SB, SH.

Plus précisément, lorsque le signal d'erreur ε est compris entre le seuil bas SB et le seuil haut SH, cela signifie que la mesure m_Es est proche de la consigne Es* et qu'il est possible de faire de la compensation de courant. Ainsi, le sélecteur 606 est conçu pour commander le convertisseur de tension 602 selon le premier mode de commande (alternance i_{AUX} positif et nul), en fournissant une commande C_Q'1 identique au signal de détection D, de manière à fermer l'interrupteur Q'1 lorsque le courant d'onduleur statorique ios est détecté comme nul. Le signal de commande C_Q'2 est en opposition du signal de commande C_Q'1, de manière à ouvrir l'interrupteur Q'2 lorsque l'interrupteur Q'1 est fermé, et à fermer l'interrupteur Q'2 lorsque l'interrupteur Q'1 est ouvert. Ainsi le premier mode de commande est maintenu sur un intervalle de temps I1 qui dure tant que le signal d'erreur ε est compris entre les deux seuils SB, SH.

Lorsque le signal d'erreur ε est inférieur au seuil bas SB, cela signifie que la mesure m_Es est trop petite par rapport à la consigne Es* et qu'il faut augmenter la tension de sortie Es. Ainsi, le sélecteur 606 est conçu pour commander le convertisseur de tension 602 selon le deuxième mode de commande en commandant l'interrupteur Q'1 pour le maintenir à l'état fermé (Q'2 maintenu à l'état ouvert) pour faire augmenter la tension de sortie Es tant que le signal d'erreur ε est inférieur au seuil bas SB. Ainsi le deuxième mode de commande est maintenu sur un intervalle de temps I2 qui dure tant que le signal d'erreur ε est inférieur au seuil bas SB. Une fois que le signal d'erreur ε repasse entre le seuil bas SB et le seuil haut SH, c'est à nouveau le premier mode de fonctionnement qui est utilisé.

Lorsque le signal d'erreur ε est supérieur au seuil haut SH, cela signifie que la mesure m_Es est trop grande par rapport à la consigne Es* et qu'il faut diminuer la tension de sortie Es. Ainsi, le sélecteur 606 est conçu pour commander le convertisseur de tension 602 selon le deuxième mode de commande en commandant l'interrupteur Q'1 pour le maintenir à l'état ouvert (Q'2 maintenu à l'état fermé) pour faire diminuer la tension de sortie Es tant que le signal d'erreur ε est supérieur au seuil haut SH. Ainsi le deuxième mode de commande est maintenu sur un intervalle de temps I2 qui dure tant que le signal d'erreur ε est supérieur au seuil haut SH. Une fois que le signal d'erreur ε repasse entre le seuil bas SB et le seuil haut SH, c'est à nouveau le premier mode de fonctionnement qui est utilisé.

Ainsi, les durées du premier intervalle de temps I1 et du deuxième intervalle de temps I2 varient afin que la mesure m_Es reste proche de la consigne Es*.

La présente invention n'est pas limitée aux modes de réalisation décrits précédemment. Il sera en effet apparent à l'homme du métier que des modifications peuvent y être apportées.

En particulier, l'invention peut s'appliquer dans le cas où la machine électrique comporte un nombre quelconque de phases statoriques.

## Revendications

1. Système électrique (100 ; 600) comportant :
- un onduleur statorique (108) destiné à être connecté, d'une part, à une borne positive d'une source de tension (102) pour recevoir un courant d'onduleur statorique (ios) et, d'autre part, à une machine électrique (106) comportant des phases statoriques (U, V, W), afin d'alimenter la machine électrique (106) à partir de la source de tension (102),
- un dispositif électrique auxiliaire (110 ; 602) destiné à être connecté à la borne positive de la source de tension (102) pour recevoir un courant auxiliaire (i_{AUX}), le dispositif électrique auxiliaire (110 ; 602) étant conçu pour sélectivement prendre une première configuration dans laquelle le courant auxiliaire (i_{AUX}) est positif et une deuxième configuration dans laquelle le courant auxiliaire (i_{AUX}) est négatif ou nul,
**caractérisé en ce qu'**il comporte en outre :
- un dispositif de détection (116) conçu pour détecter si le courant d'onduleur statorique (ios) est positif ou bien s'il est nul,
- un dispositif de commande (118 ; 605) conçu pour commander le dispositif électrique auxiliaire (110 ; 602) selon un premier mode de commande dans lequel le dispositif de commande (118 ; 605) est conçu pour placer le dispositif électrique auxiliaire (110 ; 602) :
• dans sa première configuration lorsque le courant d'onduleur statorique (ios) est détecté comme nul, et
• dans sa deuxième configuration lorsque le courant d'onduleur statorique (ios) est détecté comme positif,
le dispositif de commande (118 ; 605) est en outre conçu pour commander le dispositif électrique auxiliaire (110 ; 602) selon le deuxième mode de commande, différent du premier mode de commande, le dispositif de commande (118 ; 605) étant conçu pour alternativement commander le dispositif électrique auxiliaire (110 ; 602) selon le premier mode de commande sur un premier intervalle de temps (I1) et selon le deuxième mode de commande sur un deuxième intervalle de temps (I2).

2. Système électrique (100 ; 600) selon la revendication 1, dans lequel :
- l'onduleur statorique (108) comporte des bras respectivement associés aux phases statoriques (U, V, W), chaque bras comportant un interrupteur de côté haut et un interrupteur de côté bas connectés l'un à l'autre en un point milieu également connecté à la phase statorique (U, V, W) associée,
- le dispositif de détection (116) est conçu pour détecter que tous les interrupteurs d'un même côté sont tous ouverts ou bien tous fermés pour détecter que le courant d'onduleur statorique (ios) est nul.

3. Système électrique (100 ; 600) selon la revendication 1 ou 2, dans lequel le dispositif de commande (118 ; 605) est en outre conçu pour :
- recevoir, d'une part, une mesure (m_i_{R}; m_E_{S}) d'une grandeur électrique (i_{R}; Es) présentée par le dispositif électrique auxiliaire (110 ; 602) et, d'autre part, une consigne (i_{R}*; Es*) de cette grandeur électrique (i_{R}; E_{S}),
- modifier la durée du premier intervalle de temps (I1) et/ou du deuxième intervalle de temps (I2) afin que la mesure (m_i_{R}; m_E_{S}) de la grandeur électrique (i_{R}; E_{S}) reste proche de la consigne (i_{R}* ; E_{S}*).

4. Système électrique (100) selon l'une quelconque des revendications 1 à 3, dans lequel :
- la machine électrique (106) comporte un enroulement rotorique (R),
- le dispositif électrique auxiliaire (110) est un onduleur rotorique conçu pour fournir une tension rotorique (V_{R}) à l'enroulement rotorique (R) de la machine électrique (106) à partir de la source de tension (102).

5. Système électrique (100) selon les revendications 3 et 4 prises ensemble, dans lequel la grandeur électrique est un courant rotorique (i_{R}) parcourant l'enroulement rotorique (R) de la machine électrique (106).

6. Système électrique (100) selon l'une quelconque des revendications 1 à 5, dans lequel le courant auxiliaire (i_{AUX}) est négatif dans la deuxième configuration du dispositif électrique auxiliaire (110).

7. Système électrique (100) selon la revendication 6 dans lequel :
- le dispositif électrique auxiliaire (110) est en outre conçu pour sélectivement prendre une troisième configuration dans laquelle le courant auxiliaire (i_{AUX}) est nul,
- dans le deuxième mode de commande, le dispositif de commande (118) est conçu pour placer le dispositif électrique auxiliaire (110) :
• dans sa première configuration lorsque le courant d'onduleur statorique (ios) est détecté comme nul, et
• dans sa troisième configuration lorsque le courant d'onduleur statorique (ios) est détecté comme positif.

8. Système électrique (600) selon l'une quelconque des revendications 1 à 3, dans lequel le dispositif électrique auxiliaire (602) est un convertisseur de tension conçu pour fournir une tension de sortie (Es) à partir de la source de tension (102).

9. Système électrique (600) selon les revendications 3 et 8 prises ensemble, dans lequel la grandeur électrique est la tension de sortie (Es) du convertisseur de tension.

10. Système électrique (600) selon l'une quelconque des revendications 1 à 5, 8 et 9, dans lequel le courant auxiliaire (i_{AUX}) est nul dans la deuxième configuration du dispositif électrique auxiliaire (602).

11. Système électrique (600) selon la revendication 10 dans lequel, dans le deuxième mode de commande, le dispositif de commande (605) est conçu pour placer le dispositif électrique auxiliaire (602) soit dans sa première configuration, soit dans sa deuxième configuration, indépendamment du courant d'onduleur statorique (ios).

## Patentansprüche

1. Elektrisches System (100; 600), umfassend:
- einen Statorwechselrichter (108), der dazu bestimmt ist, zum einen mit einer Plusklemme einer Spannungsquelle (102) verbunden zu werden, um einen Statorwechselrichterstrom (i_{OS}) zu erhalten, und zum anderen mit einer mit einer elektrischen Maschine (106), die Statorphasen (U, V, W) umfasst, um die elektrische Maschine (106) aus der Spannungsquelle (102) zu versorgen,
- eine elektrische Hilfsvorrichtung (110; 602), die dazu bestimmt ist, mit der Plusklemme der Spannungsquelle (102) verbunden zu werden, um einen Hilfsstrom (i_{AUX}) zu erhalten, wobei die elektrische Hilfsvorrichtung (110; 602) dazu ausgelegt ist, selektiv eine erste Konfiguration anzunehmen, in welcher der Hilfsstrom (i_{AUX}) positiv ist, und eine zweite Konfiguration, in welcher der Hilfsstrom (i_{AUX}) negativ oder null ist, **dadurch gekennzeichnet, dass** es ferner umfasst:
- eine Detektionsvorrichtung (116), die dazu ausgelegt ist zu detektieren, ob der Statorwechselrichterstrom (ios) positiv ist oder aber ob er null ist,
- eine Steuervorrichtung (118; 605), die dazu ausgelegt ist, die elektrische Hilfsvorrichtung (110; 602) gemäß einem ersten Steuermodus zu steuern, in dem die Steuervorrichtung (118; 605) dazu ausgelegt ist, die elektrische Hilfsvorrichtung (110; 602) zu versetzen:
• in ihre erste Konfiguration, wenn der Statorwechselrichterstrom (i_{OS}) als null detektiert wird, und
• in ihre zweite Konfiguration, wenn der Statorwechselrichterstrom (ios) als positiv detektiert wird,
die Steuervorrichtung (118; 605) ferner dazu ausgelegt ist, die elektrische Hilfsvorrichtung (110; 602) gemäß dem zweiten Steuermodus zu steuern, der von dem ersten Steuermodus verschieden ist, wobei die Steuervorrichtung (118; 605) dazu ausgelegt ist, die elektrische Hilfsvorrichtung (110; 602) alternierend gemäß dem ersten Steuermodus über ein erstes
Zeitintervall (I1) und gemäß dem zweiten Steuermodus über ein zweites Zeitintervall (12) zu steuern.

2. Elektrisches System (100; 600) nach Anspruch 1, bei dem:
- der Statorwechselrichter (108) Arme umfasst, die jeweils den Statorphasen (U, V, W) zugeordnet sind, wobei jeder Arm einen High-Side-Schalter und einen Low-Side-Schalter umfasst, die miteinander in einem Mittelpunkt verbunden sind, der auch mit der zugeordneten Statorphase (U, V, W) verbunden ist,
- die Detektionsvorrichtung (116) dazu ausgelegt ist zu detektieren, dass alle Schalter einer selben Seite geöffnet sind oder aber alle geschlossen sind, um zu detektieren, dass der Statorwechselrichterstrom (i_{OS}) null ist.

3. Elektrisches System (100; 600) nach Anspruch 1 oder 2, bei dem die Steuervorrichtung (118; 605) ferner dazu ausgelegt ist:
- zum einen einen Messwert (m_i_{R}; m_E_{S}) einer elektrischen Größe (i_{R}; E_{S}), die von der elektrischen Hilfsvorrichtung (110; 602) bereitgestellt wird, und zum anderen einen Sollwert (i_{R}*; E_{S}*) dieser elektrischen Größe (i_{R}; E_{S}) zu empfangen,
- die Dauer des ersten Zeitintervalls (I1) und/oder des zweiten Zeitintervalls (12) zu ändern, damit der Messwert (m_i_{R}; m_E_{S}) der elektrischen Größe (i_{R}; E_{S}) nahe dem Sollwert (i_{R}*; E_{S}*) bleibt.

4. Elektrisches System (100) nach einem der Ansprüche 1 bis 3, bei dem:
- die elektrische Maschine (106) eine Rotorwicklung (R) umfasst,
- die elektrische Hilfsvorrichtung (110) ein Rotorwechselrichter ist, der dazu ausgelegt ist, eine Rotorspannung (V_{R}) an die Rotorwicklung (R) der elektrischen Maschine (106) aus der Spannungsquelle (102) abzugeben.

5. Elektrisches System (100) nach den Ansprüchen 3 und 4 zusammengenommen, bei dem die elektrische Größe ein Rotorstrom (i_{R}) ist, der durch die Rotorwicklung (R) der elektrischen Maschine (106) fließt.

6. Elektrisches System (100) nach einem der Ansprüche 1 bis 5, bei dem der Hilfsstrom (i_{AUX}) in der zweiten Konfiguration der elektrischen Hilfsvorrichtung (110) negativ ist.

7. Elektrisches System (100) nach Anspruch 6, bei dem:
- die elektrische Hilfsvorrichtung (110) ferner dazu ausgelegt ist, selektiv eine dritte Konfiguration anzunehmen, in welcher der Hilfsstrom (i_{AUX}) null ist,
- in dem zweiten Steuermodus die Steuervorrichtung (118) dazu ausgelegt ist, die elektrische Hilfsvorrichtung (110) zu versetzen:
• in ihre erste Konfiguration, wenn der Statorwechselrichterstrom (i_{OS}) als null detektiert wird, und
• in ihre dritte Konfiguration, wenn der Statorwechselrichterstrom (ios) als positiv detektiert wird.

8. Elektrisches System (600) nach einem der Ansprüche 1 bis 3, bei dem die elektrische Hilfsvorrichtung (602) ein Spannungswandler ist, der dazu ausgelegt ist, eine Ausgangsspannung (E_{S}) aus der Spannungsquelle (102) abzugeben.

9. Elektrisches System (600) nach den Ansprüchen 3 und 8 zusammengenommen, bei dem die elektrische Größe die Ausgangsspannung (E_{S}) des Spannungswandlers ist.

10. Elektrisches System (600) nach einem der Ansprüche 1 bis 5, 8 und 9, bei dem der Hilfsstrom (i_{AUX}) in der zweiten Konfiguration der elektrischen Hilfsvorrichtung (602) null ist.

11. Elektrisches System (600) nach Anspruch 10, bei dem in dem zweiten Steuermodus die Steuervorrichtung (605) dazu ausgelegt ist, die elektrische Hilfsvorrichtung (602) unabhängig von dem Statorwechselrichterstrom (los) entweder in ihre erste Konfiguration oder in ihre zweite Konfiguration zu versetzen.

## Claims

1. Electrical system (100; 600) comprising:
- a stator inverter (108) intended to be connected, on the one hand, to a positive terminal of a voltage source (102) in order to receive a stator inverter current (i_{OS}) and, on the other hand, to an electrical machine (106) comprising stator phases (U, V, W), in order to supply power to the electrical machine (106) from the voltage source (102),
- an auxiliary electrical device (110; 602) intended to be connected to the positive terminal of the voltage source (102) in order to receive an auxiliary current (i_{AUX}), the auxiliary electrical device (110; 602) being designed to selectively adopt a first configuration in which the auxiliary current (i_{AUX}) is positive and a second configuration in which the auxiliary current (i_{AUX}) is negative or zero, **characterized in that** it furthermore comprises:
- a detection device (116) designed to detect whether the stator inverter current (i_{OS}) is positive or whether it is zero,
- a control device (118; 605) designed to control the auxiliary electrical device (110; 602) in a first control mode in which the control device (118; 605) is designed to place the auxiliary electrical device (110; 602):
• in its first configuration when the stator inverter current (i_{OS}) is detected as being zero, and
• in its second configuration when the stator inverter current (i_{OS}) is detected as being positive, the control device (118; 605) furthermore being designed to control the auxiliary electrical device (110; 602) in the second control mode, different from the first control mode, the control device (118; 605) being designed to alternately control the auxiliary electrical device (110; 602) in the first control mode over a first time
interval (11) and in the second control mode over a second time interval (12).

2. Electrical system (100; 600) according to Claim 1, wherein:
- the stator inverter (108) comprises arms that are respectively associated with the stator phases (U, V, W), each arm comprising a high-side switch and a low-side switch that are connected to one another at a centre tap that is also connected to the associated stator phase (U, V, W),
- the detection device (116) is designed to detect that all of the switches on the same side are all open or else all closed so as to detect that the stator inverter current (i_{OS}) is zero.

3. Electrical system (100; 600) according to Claim 1 or 2, wherein the control device (118; 605) is furthermore designed to:
- receive, on the one hand, a measurement (m_i_{R}; m_E_{S}) of an electrical variable (i_{R}; E_{S}) of the auxiliary electrical device (110; 602) and, on the other hand, a setpoint (i_{R}*; E_{S}*) of this electrical variable (i_{R}; E_{S}) ,
- modify the duration of the first time interval (11) and/or of the second time interval (12) such that the measurement (m_i_{R}; m_E_{S}) of the electrical variable (i_{R}; E_{S}) remains close to the setpoint (i_{R}*; E_{S}*).

4. Electrical system (100) according to any one of Claims 1 to 3, wherein:
- the electrical machine (106) comprises a rotor winding (R),
- the auxiliary electrical device (110) is a rotor inverter designed to supply a rotor voltage (V_{R}) to the rotor winding (R) of the electrical machine (106) from the voltage source (102).

5. Electrical system (100) according to Claims 3 and 4 taken together, wherein the electrical variable is a rotor current (i_{R}) flowing through the rotor winding (R) of the electrical machine (106).

6. Electrical system (100) according to any one of Claims 1 to 5, wherein the auxiliary current (i_{AUX}) is negative in the second configuration of the auxiliary electrical device (110).

7. Electrical system (100) according to Claim 6, wherein:
- the auxiliary electrical device (110) is furthermore designed to selectively adopt a third configuration in which the auxiliary current (i_{AUX}) is zero,
- in the second control mode, the control device (118) is designed to place the auxiliary electrical device (110) :
• in its first configuration when the stator inverter current (i_{OS}) is detected as being zero, and
• in its third configuration when the stator inverter current (i_{OS}) is detected as being positive.

8. Electrical system (600) according to any one of Claims 1 to 3, wherein the auxiliary electrical device (602) is a voltage converter designed to supply an output voltage (Es) from the voltage source (102).

9. Electrical system (600) according to Claims 3 and 8 taken together, wherein the electrical variable is the output voltage (Es) of the voltage converter.

10. Electrical system (600) according to any one of Claims 1 to 5, 8 and 9, wherein the auxiliary current (i_{AUX}) is zero in the second configuration of the auxiliary electrical device (602).

11. Electrical system (600) according to Claim 10, wherein, in the second control mode, the control device (605) is designed to place the auxiliary electrical device (602) either in its first configuration or in its second configuration, independently of the stator inverter current (i_{OS}) .
